(19) Europäisches Patentamt
European Patent Office
Office européen des brevets

(11) **EP 2 721 626 B1**

(12) **EUROPÄISCHE PATENTSCHRIFT**

(45) Veröffentlichungstag und Bekanntmachung des Hinweises auf die Patenterteilung:
**20.01.2016 Patentblatt 2016/03**

(21) Anmeldenummer: **12737788.5**

(22) Anmeldetag: **18.07.2012**

(51) Int Cl.:
***H01H 33/59*** *(2006.01)*

(86) Internationale Anmeldenummer:
**PCT/EP2012/064082**

(87) Internationale Veröffentlichungsnummer:
**WO 2013/014041 (31.01.2013 Gazette 2013/05)**

(54) **GLEICHSPANNUNGS-LEITUNGSSCHUTZSCHALTER**

DC VOLTAGE CIRCUIT BREAKER

DISJONCTEUR À TENSION CONTINUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2011 DE 102011079723**

(43) Veröffentlichungstag der Anmeldung:
**23.04.2014 Patentblatt 2014/17**

(73) Patentinhaber: **Siemens Aktiengesellschaft 80333 München (DE)**

(72) Erfinder:
• **GAXIOLA, Enrique**
  **13115 St. Paul Lez Durance (FR)**
• **VOGELSANG, Jakob**
  **90765 Fürth (DE)**

(56) Entgegenhaltungen:
**EP-A1- 0 758 137    US-A- 4 442 469**
**US-A- 4 740 858**

**Beschreibung**

Die vorliegende Erfindung betrifft einen Gleichspannungs-Leitungsschutzschalter gemäß Patentanspruch 1, ein Verfahren zum Betreiben eines Gleichspannungs-Leitungsschutzschalters gemäß Patentanspruch 6, sowie ein Gleichstrom-Leitungsnetz gemäß Patentanspruch 7.

Elektrische Energie wird in Kraftwerken in der Regel als Dreiphasenwechselstrom erzeugt. Zur Übertragung wird diese Energie im Stand der Technik durch Leistungstransformatoren auf sehr hohe elektrische Wechselspannungen transformiert und über Freileitungen übertragen. Bei sehr langen Freileitungen wäre eine Übertragung der Energie mit Gleichstrom allerdings mit geringeren Verlusten verbunden und damit günstiger.

Bei der Gleichstromübertragung bestehen im Stand der Technik allerdings Schwierigkeiten, Leistungsflüsse in vermaschten Leitungsnetzen zu steuern. Daher werden zur Gleichstromübertragung bisher fast ausschließlich Punkt-zu-Punkt-Verbindungen ohne Abzweigungen oder Maschen verwendet.

Für die Zukunft ist allerdings ein Auf- und Ausbau von Gleichstrom-Leitungsnetzen geplant. Hierzu sind Gleichspannungs-Leitungsschutzschalter erforderlich, um die Verfügbarkeit der geplanten Gleichstrom-Leitungsnetze zu erhöhen. Gleichspannungs-Leitungsschutzschalter dienen dazu, im Fehlerfall Teile eines Leitungsnetzes selektiv abzuschalten und dadurch einen Ausfall des gesamten Leitungsnetzes zu verhindern.

Aus der EP 0 758 137 ist ein Gleichspannungs-Leitungsschutzschalter bekannt, der eine Reihenschaltung von zwei oder mehr Unterbrechern, eine Kommutatorschaltung eines Kommutatorkondensators und einer Kommutatorspule sowie einen Energieabsorber umfasst.

Weitere Gleichspannung-Leitungsschutzschalter sind aus den Schriften US 4,740,858 A und US 4,442,469 A bekannt.

Die Aufgabe der vorliegenden Erfindung ist es, einen Gleichspannungs-Leitungsschutzschalter bereitzustellen. Diese Aufgabe wird durch einen Gleichspannungs-Leitungsschutzschalter mit den Merkmalen des Patentanspruchs 1 gelöst. Es ist weiter Aufgabe der vorliegenden Erfindung, ein Verfahren zum Betreiben eines Gleichspannungs-Leitungsschutzschalters anzugeben. Diese Aufgabe wird durch ein Verfahren mit den Merkmalen des Patentanspruchs 6 gelöst. Es ist weiter Aufgabe der vorliegenden Erfindung, ein ausfallsichereres Gleichstrom-Leitungsnetz bereitzustellen. Diese Aufgabe wird durch ein Gleichstrom-Leitungsnetz mit den Merkmalen des Patentanspruchs 7 gelöst. Bevorzugte Weiterbildungen sind in den abhängigen Ansprüchen angegeben.

Ein erfindungsgemäßer Gleichspannungs-Leitungsschutzschalter weist einen ersten Knoten, einen zweiten Knoten, einen dritten Knoten, einen vierten Knoten und einen fünften Knoten auf. Dabei ist zwischen dem ersten Knoten und dem vierten Knoten einen Parallelschaltung eines ersten Unterbrechers und einen ersten Kondensators angeordnet und zwischen dem vierten Knoten und dem dritten Knoten eine Parallelschaltung eines zweiten Unterbrechers und eines zweiten Kondensators angeordnet. Außerdem ist zwischen dem ersten Knoten und dem fünften Knoten eine Reihenschaltung eines Kommutatorwiderstands, einer Kommutatorspule und eines Kommutatorkondensators angeordnet. Weiter ist zwischen dem ersten Knoten und dem fünften Knoten ein Energieabsorber und zwischen dem fünften Knoten und dem dritten Knoten ein Schalter angeordnet. Dabei kann zwischen dem ersten Knoten und dem zweiten Knoten eine erste Gleichspannung angelegt und zwischen dem dritten Knoten und dem zweiten Knoten eine zweite Gleichspannung abgegriffen werden. Vorteilhafterweise bildet die Reihenschaltung aus Kommutatorwiderstand, Kommutatorspule und Kommutatorkondensator bei diesem Gleichspannungs-Leitungsschutzschalter eine Kommutatorschaltung, die sowohl über den ersten Unterbrecher als auch den zweiten Unterbrecher wirkt und einen Nulldurchgang des Stromflusses durch die Unterbrecher erzwingen kann. Dieser erzwungene Nulldurchgang erlaubt vorteilhafterweise ein Auftrennen der durch den Gleichspannungs-Leitungsschutzschalter gesicherten Leitung, ohne dass extreme Einschwingspannungen auftreten. Dies ermöglicht vorteilhafterweise eine sehr kompakte und kostengünstige Ausführung des Gleichspannungs-Leitungsschutzschalters und verkürzt die maximal notwendige Zeit zur vollständigen Stromunterbrechung und selektiven Abschaltung eines Teils eines Leitungsnetzes.

In einer bevorzugten Ausführungsform des Gleichspannungs-Leitungsschutzschalters weist der zweite Kondensator eine Kapazität auf, die zehnmal so groß wie eine Kapazität des ersten Kondensators ist. Vorteilhafterweise bewirken die Kondensatoren dann eine Aufteilung der elektrischen Spannung auf die beiden Unterbrecher. Vorteilhafterweise fällt dabei über den ersten Unterbrecher eine Spannung ab, die zehnmal so groß wie die Spannung ist, die über den zweiten Unterbrecher abfällt.

In einer bevorzugten Ausführungsform des Gleichspannungs-Leitungsschutzschalters ist der erste Unterbrecher ein SF6-Unterbrecher. Vorteilhafterweise eignen sich SF6-Unterbrecher zum Unterbrechen sehr großer Spannungen.

Bevorzugt ist der zweite Unterbrecher ein Vakuum-Unterbrecher. Vorteilhafterweise eignen sich Vakuum-Unterbrecher für große Schalthäufigkeiten und sind weitgehend wartungsfrei.

In einer Ausführungsform des Gleichspannungs-Leitungsschutzschalters weist dieser einen sechsten Knoten und einen siebten Knoten auf. Dabei ist der Kommutatorwiderstand zwischen dem ersten Knoten und dem sechsten Knoten, die Kommutatorspule zwischen dem sechsten Knoten und dem siebten Knoten und der Kommutatorkondensator zwischen dem siebten Knoten und dem fünften Knoten angeordnet. Vorteilhafterweise kann ein durch die Kommutatorschaltung zur Stromunterbrechung bewirkter elektrischer Gegenstrom dabei über die Größe des Kommutatorwiderstands und des Kommutatorkondensators eingestellt werden.

Ein erfindungsgemäßes Verfahren zum Betreiben eines Gleichspannungs-Leitungsschutzschalters, der auf die oben genannte Weise ausgebildet ist, beginnt in einem Zustand, in dem der Schalter geöffnet ist, und weist Schritte auf zum Detektieren eines Anstiegs einer Stromstärke eines im Gleichspannungs-Leitungsschutzschalter fließenden elektrischen Stroms, zum Schließen des Schalters und zum Öffnen des ersten Unterbrechers und des zweiten Unterbrechers. Vorteilhafterweise erlaubt dieses Verfahren eine physikalische Unterbrechung eines Leitungsnetzes mit einem Energieniveau von bis zu 20 MJ in einem Zeitraum von etwa 10 ms. Dies entspricht vorteilhafterweise der bisherigen Praxis in Wechselstrom-Leitungsnetzen.

Ein erfindungsgemäßes Gleichstrom-Leitungsnetz weist einen Gleichspannungs-Leitungsschutzschalter der vorgenannten Art auf. Vorteilhafterweise können bei diesem Gleichstrom-Leitungsnetz Teile des Leitungsnetzes im Fehlerfall selektiv abgeschaltet werden, ohne dass dies einen Ausfall des gesamten Gleichstrom-Leitungsnetzes zur Folge hat.

In einer bevorzugten Ausführungsform des Gleichstrom-Leitungsnetzes weist dieses mindestens eine Masche auf. Vorteilhafterweise erlaubt der im Gleichstrom-Leitungsnetz eingesetzte Gleichspannungs-Leitungsschutzschalter eine vermaschte Ausgestaltung des Gleichstrom-Leitungsnetzes.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei zeigen:

Figur 1 eine Schaltungsanordnung eines Gleichspannungs-Leitungsschutzschalters;

Figur 2 ein Diagramm zur Auslegung eines Kommutators des Gleichspannungs-Leitungsschutzschalters; und

Figur 3 einen beispielhaften zeitlichen Spannungsverlauf im Gleichspannungs-Leitungsschutzschalters.

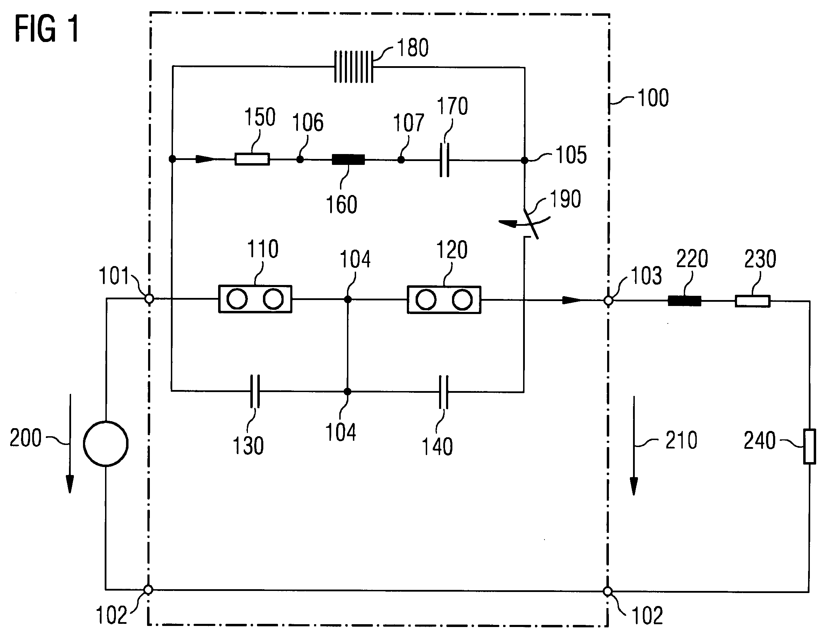

Figur 1 zeigt eine Schaltungsanordnung eines Gleichspannungs-Leitungsschutzschalters 100. Der Gleichspannungs-Leitungsschutzschalter kann in einem Gleichstrom-Leitungsnetz integriert werden, um im Falle eines Kurzschlusses einen Teil des Gleichstrom-Leitungsnetzes selektiv abzuschalten. Der Gleichspannungs-Leitungsschutzschalter 100 kann z. B. zur Verwendung in einem Hochspannungs-Gleichstrom-Leitungsnetz vorgesehen sein. Der Gleichspannungs-Leitungsschutzschalter 100 ermöglicht in einem Gleichstrom-Leitungsnetz einen Schutz der positiven Phase gegen das Erdpotential, der negativen Phase gegen das Erdpotential und der positiven Phase gegen die negative Phase.

Der Gleichspannungs-Leitungsschutzschalter 100 weist einen ersten Knoten 101, einen zweiten Knoten 102, einen dritten Knoten 103, einen vierten Knoten 104, einen fünften Knoten 105, einen sechsten Knoten 106 und einen siebten Knoten 107 auf. Die Knoten 101, 102, 103, 104, 105, 106, 107 sind Schaltungsknoten des Gleichspannungs-Leitungsschutzschalters 100, die sich jeweils auf einem elektrischen Potential befinden. Der erste Knoten 101 kann demnach auch elektrische Leiterabschnitte umfassen, sofern die elektrischen Widerstände dieser Leiterabschnitte vernachlässigbar sind.

Zwischen dem ersten Knoten 101 und dem zweiten Knoten 102 des Gleichspannungs-Leitungsschutzschalters 100 kann eine Gleichspannung 200 angelegt werden. Die Gleichspannung 200 kann eine Quellenspannung sein, die durch einen Hochspannungsgleichrichter an ein Gleichstrom-Leitungsnetz angelegt wird. Der erste Knoten 101 und der zweite Knoten 102 bilden in diesem Fall eine Eingangsseite des Gleichspannungs-Leitungsschutzschalters 100 und des an den Gleichspannungs-Leitungsschutzschalter 100 anschließenden Gleichstrom-Leitungsnetzes. Die zwischen dem ersten Knoten 101 und dem zweiten Knoten 102 angelegte Gleichspannung 200 kann beispielsweise 500 kV betragen. Die Gleichspannung 200 kann jedoch auch höhere Spannungswerte von mehr als 1200 kV annehmen. Die Gleichspannung 200 kann in dem Gleichstrom-Leitungsnetz, in dem der Gleichspannungs-Leitungsschutzschalter 100 verwendet wird, einen Gleichstrom von 20 kA oder mehr anregen.

Zwischen dem dritten Knoten 103 und dem zweiten Knoten 102 des Gleichspannungs-Leitungsschutzschalters 100 kann eine Ausgangsspannung 210 abgegriffen werden. Die Ausgangsspannung 210 ist eine Gleichspannung und entspricht im Wesentlichen der zwischen dem ersten Knoten 101 und dem zweiten Knoten 102 angelegten Gleichspannung 200. Im Falle eines Kurzschlusses kann der Gleichspannungs-Leitungsschutzschalter 100 die Verbindung zwischen dem ersten Knoten 101 und dem dritten Knoten 103 jedoch auftrennen, so dass die Ausgangsspannung 210 nicht mehr der Gleichspannung 200 entspricht.

An dem dritten Knoten 103 und dem zweiten Knoten 102 können sich Leitungsteile des Gleichstrom-Leitungsnetzes anschließen, in dem der Gleichspannungs-Leitungsschutzschalter 100 verwendet wird. Diese Teile des Gleichstrom-Leitungsnetzes sind in Figur 1 schematisch durch eine Leitungsimpedanz 220, einen Leitungswiderstand 230 und einen Lastwiderstand 240 dargestellt.

Zwischen dem ersten Knoten 101 und dem vierten Knoten 104 ist ein SF6-Unterbrecher 110 angeordnet. Der SF6-Unterbrecher 110 kann auch als Selbstblasschalter bezeichnet werden. Der SF6-Unterbrecher 110 dient dazu, im Falle eines Kurzschlusses eine elektrische Verbindung zwischen dem ersten Knoten 101 und dem vierten Knoten 104 aufzutrennen. Der SF6-Unterbrecher 110 enthält ein Schwefelhexaflourid-Gas, das als Löschmittel dient, um einen während des Auftrennens entstehenden Schaltlichtbogen zu löschen.

Zwischen dem vierten Knoten 104 und dem dritten Knoten 103 weist der Gleichspannungs-Leitungsschutzschalter 100 einen Vakuum-Unterbrecher 120 auf. Der Vakuum-Unterbrecher 120 dient dazu, im Falle eines Kurzschlusses die elektrische Verbindung zwischen dem vierten Knoten 104 und dem dritten Knoten 103 aufzutrennen. Der Vakuum-Unterbrecher 120 ist in seinem Inneren evakuiert, um während des Auftrennens die Ausbildung eines Schaltlichtbogens zu verhindern.

Zwischen dem ersten Knoten 101 und dem vierten Knoten 104 des Gleichspannungs-Leitungsschutzschalters 100 ist dem SF6-Unterbrecher 110 ein erster Kondensator 130 parallel geschaltet. Zwischen dem vierten Knoten 104 und dem dritten Knoten 103 ist dem Vakuum-Unterbrecher 120 ein zweiter Kondensator 140 parallel geschaltet. Die Kondensatoren 130, 140 dienen dazu, die über den SF6-Unterbrecher 110 und dem Vakuumunterbrecher 120 abfallende elektrische Spannung auf den SF6-Unterbrecher 110 und den Vakuum-Unterbrecher 120 aufzuteilen. Bevorzugt weist der zweite Kondensator 140 eine elektrische Kapazität auf, die zehnmal so groß ist wie die Kapazität des ersten Kondensators 130.

Der SF6-Unterbrecher 110 und der Vakuum-Unterbrecher 120 können die elektrische Verbindung zwischen dem ersten Knoten 101 und dem dritten Knoten 103 nur auftrennen, wenn ein zwischen dem ersten Knoten 101 und dem dritten Knoten 103 fließender elektrischer Strom klein ist, sich also dem Wert 0 annähert. Anderenfalls kommt es während des Auftrennens der Verbindung zwischen dem ersten Knoten 101 und dem dritten Knoten 103 zur nichtlöschbaren Ausbildung von Lichtbögen, die den SF6-Unterbrecher 110, den Vakuum-Unterbrecher 120, den gesamten Gleichspannungs-Leitungsschutzschalter 100 oder auch weitere Teile eines Gleichstrom-Leitungsnetzes beschädigen oder zerstören können. Somit muss im Falle eines Kurzschlusses der zwischen dem ersten Knoten 101 und dem dritten Knoten 103 fließende elektrische Strom binnen kürzester Zeit auf 0 abgesenkt werden, damit der SF6-Unterbrecher 110 und der Vakuum-Unterbrecher 120 die elektrische Verbindung zwischen dem ersten Knoten 101 und dem dritten Knoten 103 unterbrechen können. Hierzu weist der Gleichspannungs-Leitungsschutzschalter 100 eine Kommutatorschaltung auf, die zwischen dem ersten Knoten 101 und dem fünften Knoten 105 angeordnet ist.

Die Kommutatorschaltung des Gleichspannungs-Leitungsschutzschalters 100 umfasst einen Kommutatorwiderstand 150, eine Kommutatorspule 160 und einen Kommutatorkondensator 170. Der Kommutatorwiderstand 150 ist zwischen dem ersten Knoten 101 und dem sechsten Knoten 106 angeordnet. Die Kommutatorspule 160 ist zwischen dem sechsten Knoten 106 und dem siebten Knoten 107 angeordnet. Der Kommutatorkondensator 170 ist zwischen dem siebten Knoten 107 und dem fünften Knoten 105 angeordnet. Es wäre jedoch auch möglich, die Reihenfolge von Kommutatorwiderstand 150, Kommutatorspule 160 und Kommutatorkondensator 170 zu ändern. Wesentlich ist lediglich, dass der Kommutatorwiderstand 150, die Kommutatorspule 160 und der Kommutatorkondensator 170 eine Reihenschaltung bilden und zwischen dem ersten Knoten 101 und dem fünften Knoten 105 angeordnet sind.

Die Kommutatorschaltung dient dazu, einen elektrischen Gegenstrom durch dem Vakuumunterbrecher 120 und den SF6-Unterbrecher 110 zu erzeugen, der dem gewöhnlichen Stromfluss durch den SF6-Unterbrecher 110 und den Vakuum-Unterbrecher 120 entgegen gerichtet ist und diesen kompensiert. Auf diese Weise bewirkt die Kommutatorschaltung einen Nulldurchgang des Stromflusses durch den SF6-Unterbrecher 110 und den Vakuum-Unterbrecher 120, der es dem SF6-Unterbrecher 110 und dem Vakuum-Unterbrecher 120 ermöglicht, die Verbindung zwischen dem ersten Knoten 101 und dem dritten Knoten 103 zu unterbrechen.

Zwischen dem fünften Knoten 105 und dem dritten Knoten 103 ist ein Schalter 190 angeordnet. Der Schalter 190 kann ein Halbleiterschalter sein, beispielsweise ein Bipolartransistor mit isolierter Gate-Elektrode (IGBT) oder ein Thyristor (three terminal Semi-Conductor Rectifier, SCR). Ist der Schalter 190 geschlossen, also leitend, so ist die aus Kommutatorwiderstand 150, Kommutatorspule 160 und Kommutatorkondensator 170 gebildete Kommutatorschaltung dem SF6-Unterbrecher 110 und dem Vakuum-Unterbrecher 120 parallel geschaltet.

Der Gleichspannungs-Leitungsschutzschalter 100 weist ferner einen Energieabsorber 180 auf, der zwischen dem ersten Knoten 101 und dem fünften Knoten 105 angeordnet ist. Der Energieabsorber 180 ist somit der Kommutatorschaltung parallel geschaltet. Der Energieabsorber 180 dient dazu, eine im Fall eines Kurzschlusses und einer durch den Gleichspannungs-Leitungsschutzschalter 100 bewirkten Unterbrechung freiwerdende Energie zu absorbieren. Der Energieabsorber 180 kann beispielsweise einen ZnO-Varistorstapel umfassen.

Der durch die aus Kommutatorwiderstand 150, Kommutatorspule 160 und Kommutatorkondensator 170 gebildete Kommutatorschaltung generierte Gegenstrom kann über die Größe des Kommutatorwiderstands 150 und des Kommutatorkondensators 170 festgelegt werden. Es gilt:

$$L_{Com} = \frac{U_{C_{Com}}}{di(t)/dt}$$

und

$$C_{Com} = \frac{I_{Com}}{U_{C_{Com}}} L_{Com}$$

Die Gleichspannung 200 kann beispielsweise 500 kV betragen. Ein am ersten Knoten 101 des Gleichspannungs-Leitungsschutzschalters 100 in den Gleichspannungs-Leitungsschutzschalter 100 fließender Strom kann beispielsweise eine Stromstärke von 20 kA aufweisen.

Um die Anforderungen an die Kommutatorschaltung des Gleichspannungs-Leitungsschalters gering zu halten, ist eine niedrige Ladespannung des Kommutatorkondensators 170 wünschenswert. Aus obigen Gleichungen ist erkennbar, dass eine hohe Stromänderung di/dt eine kleine Kapazität des Kommutatorkondensators 170 ermöglicht.

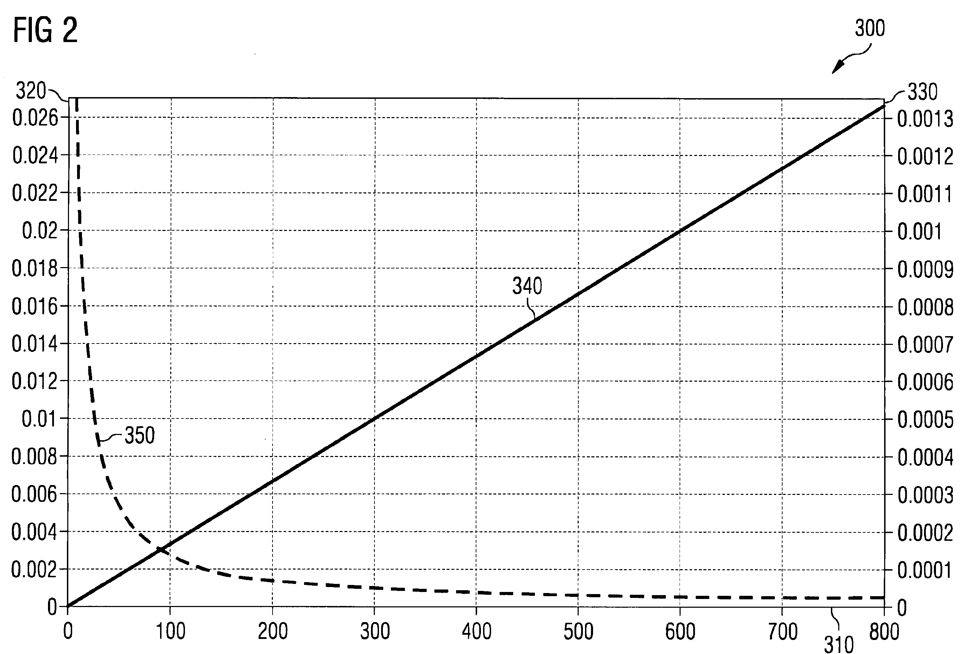

Figur 2 zeigt einen Graphen 300 zur Kommutatorauslegung. Dabei wurde die Stromänderungen di/dt beispielhaft auf 100 A/μs festgelegt. Im Graphen 300 der Figur 2 ist auf einer horizontalen Achse eine Kondensatorspannung 310 am Kommutatorkondensator 170 in Kilovolt aufgetragen. Auf einer ersten vertikalen Achse ist eine Induktivität 320 der Kommutatorspule 160 in Henry aufgetragen. Ein Induktivitätsverlauf 340 gibt einen geeigneten Wert der Induktivität 320 der Kommutatorspule 160 für jede mögliche Kondensatorspannung 310 am Kommutatorkondensator 170 an. Der Induktivitätsverlauf 340 ist linear ausgebildet. Auf einer zweiten vertikalen Achse des Graphen 300 zur Kommutatorauslegung ist eine Kapazität 330 des Kommutatorkondensators 170 in Farad aufgetragen. Ein Kapazitätsverlauf 350 gibt eine mögliche Kapazität des Kommutatorkondensators 370 für jeden möglichen Wert der Kondensatorspannung 310 und für einen festgelegten Wert der Induktivität der Kommutatorspule 160 an.

Im gewöhnlichen Betrieb des Gleichspannungs-Leitungsschutzschalters 100 ist der Schalter 190 des Gleichspannungs-Leitungsschutzschalters 100 geöffnet. Stromfluss zwischen dem ersten Knoten 101 und dem dritten Knoten 103 ist über den SF6-Unterbrecher 110 und den Vakuum-Unterbrecher 120 möglich. Kommt es im Gleichstrom-Leitungsnetz, in dem der Gleichspannungs-Leitungsschutzschalter 100 verwendet wird, zu einem Kurzschluss, so steigt der durch den Gleichspannungs-Leitungsschutzschalter 100 fließende elektrische Strom stark an. Dies wird durch eine in Figur 1 nicht dargestellte Detektionsvorrichtung detektiert.

Wird ein übermäßiger Anstieg des im Gleichspannungs-Leitungsschutzschalter 100 fließenden elektrischen Stroms erkannt, so wird in einem ersten Schritt der Schalter 190 geschlossen, so dass eine leitende Verbindung zwischen dem fünften Knoten 105 und dem dritten Knoten 103 des Gleichspannungs-Leitungsschutzschalters 100 besteht.

In der Folge kommt es zu einem Stromfluss zwischen dem ersten Knoten 101 und dem dritten Knoten 103 über die aus Kommutatorwiderstand 150, Kommutatorspule 160 und Kommutatorkondensator 170 gebildete Kommutatorschaltung. Dieser Stromfluss gleicht einen Stromfluss über den SF6-Unterbrecher 110 und den Vakuum-Unterbrecher 120 aus, so dass der über den SF6-Unterbrecher 110 und den Vakuum-Unterbrecher 120 fließende elektrische Strom auf den Wert null zurückgeht.

Zu diesem Zeitpunkt unterbrechen der SF6-Unterbrecher 110 und der Vakuum-Unterbrecher 120 die elektrisch leitende Verbindung zwischen dem ersten Knoten 101 und dem dritten Knoten 103. Durch Induktivitäten in dem Gleichspannungs-Leitungsschutzschalter 100 nachfolgenden Teilen des Gleichstrom-Leitungsnetzes, die in Figur 1 durch die Leitungsimpedanz 220 repräsentiert sind, wird der am dritten Knoten 103 fließende elektrische Strom jedoch noch aufrechterhalten und die im Gleichstrom-Leitungsnetz gespeicherte elektrische Energie wird frei. Diese elektrische Energie wird durch den Energieabsorber 180 absorbiert, ohne dass der Gleichspannungs-Leitungsschutzschalter 100 oder andere Teile des Gleichstrom-Leitungsnetzes beschädigt werden.

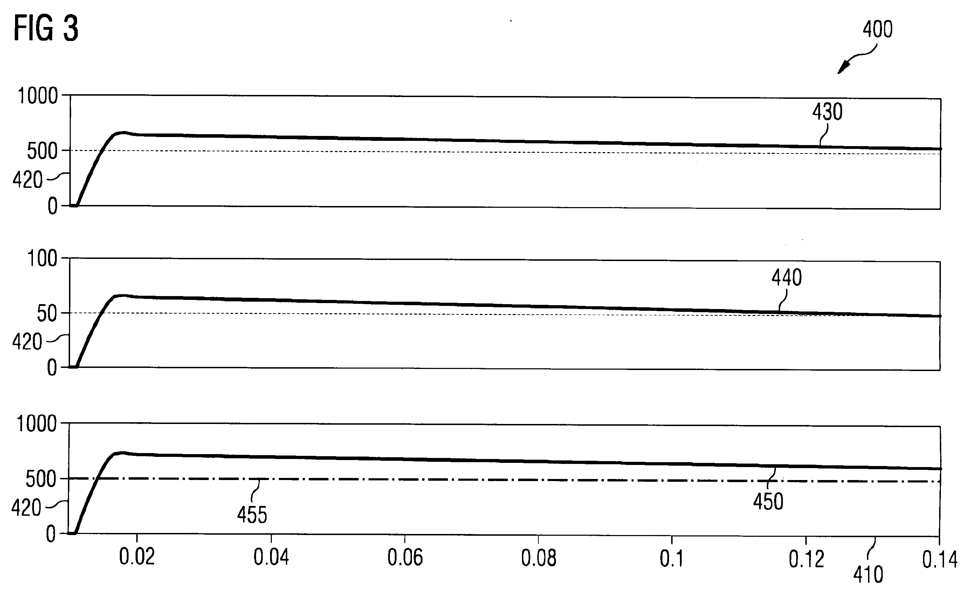

Figur 3 zeigt einen Graphen 400 der zeitlichen Spannungsverläufe an unterschiedlichen Komponenten des Gleichspannungs-Leitungsschutzschalters 100 nach dem beschriebenen Unterbrechen des Gleichstrom-Leitungsnetzes durch den Gleichspannungs-Leitungsschutzschalter 100. Auf einer horizontalen Achse ist eine Zeit in Sekunden aufgetragen. Auf den vertikalen Achsen ist jeweils eine elektrische Spannung in Kilovolt aufgetragen. Eine erste Kurve gibt einen Spannungsverlauf 430 am SF6-Unterbrecher 110 an. Eine zweite Kurve gibt einen Spannungsverlauf 440 am Vakuum-Unterbrecher 120 an. Eine dritte Kurve gibt einen Spannungsverlauf 450 am Energieabsorber 180 an. Außerdem ist eine beispielhaft gewählte Nominalspannung 450 von 500 kV dargestellt.

Es ist erkennbar, dass die am SF6-Unterbrecher 110, am Vakuum-Unterbrecher 120 und am Energieabsorber 180 anliegenden Spannungen bereits nach kurzer Zeit wieder ihre Sollwerte erreichen. Außerdem ist erkennbar, dass die am SF6-Unterbrecher 110 anliegende elektrische Spannung zehnmal so groß wie die am Vakuum-Unterbrecher 120 anliegende elektrische Spannung ist. Dies wird durch die Wahl der Kapazitäten des ersten Kondensators 130 und des zweiten Kondensators 140 erreicht. Der zweite Kondensator 140 weist eine Kapazität auf, die zehnmal so groß ist, wie die Kapazität des ersten Kondensators 130.

Der Gleichspannungs-Leitungsschutzschalter 100 ermöglicht eine physikalische Trennung in einem Gleichstrom-Leitungsnetz bei Energien von bis zu 20 MJ in einer Zeit in der Größenordnung von 10 ms. Dies entspricht dem bei Wechselspannungs-Leitungsnetzen Üblichen. Der Gleichspannungs-Leitungsschutzschalter 100 erlaubt die Verwendung von Gleichstrom-Leitungsnetzen mit Maschen, also von Gleichstrom-Leitungsnetzen, die nicht lediglich eine Punkt-zu-Punkt-Verbindung umfassen. Der Gleichspannungs-Leitungsschutzschalter 100 ist besonders vorteilhaft für die Verwendung in Multi-Terminal-Off-Shore-Hochspannungs-Einspeisepunkten, die erneuerbare Energiequellen nutzen. Der Gleichspannungs-Leitungsschutzschalter 100 kann beispielsweise in Kombination mit Windkraftanlagen verwendet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Gleichspannungs-Leitungsschutzschalter (100) mit einem ersten Knoten (101), einem zweiten Knoten (102), einem dritten Knoten (103), einem vierten Knoten (104) und einem fünften Knoten (105), wobei zwischen dem ersten Knoten (101) und dem vierten Knoten (104) eine Parallelschaltung eines ersten Unterbrechers (110) und eines ersten Kondensators (130) angeordnet ist, wobei zwischen dem vierten Knoten (104) und dem dritten Knoten (103) eine Parallelschaltung eines zweiten Unterbrechers (120) und eines zweiten Kondensators (140) angeordnet ist, wobei zwischen dem ersten Knoten (101) und dem fünften Knoten (105) eine Reihenschaltung eines Kommutatorwiderstands (150), einer Kommutatorspule (160) und eines Kommutatorkondensators (170) angeordnet ist, wobei zwischen dem ersten Knoten (101) und dem fünften Knoten (105) ein Energieabsorber (180) angeordnet ist, wobei zwischen dem fünften Knoten (105) und dem dritten Knoten (103) ein Schalter (190) angeordnet ist, wobei zwischen dem ersten Knoten (101) und dem zweiten Knoten (102) eine erste Gleichspannung (200) angelegt werden kann, wobei zwischen dem dritten Knoten (103) und dem zweiten Knoten (102) eine zweite Gleichspannung (210) abgegriffen werden kann.

2. Gleichspannungs-Leitungsschutzschalter (100) gemäß Anspruch 1, wobei der zweite Kondensator (140) eine Kapazität aufweist, die zehnmal so groß wie eine Kapazität des ersten Kondensators (130) ist.

3. Gleichspannungs-Leitungsschutzschalter (100) gemäß einem der vorhergehenden Ansprüche, wobei der erste Unterbrecher (110) ein SF6-Unterbrecher ist.

4. Gleichspannungs-Leitungsschutzschalter (100) gemäß einem der vorhergehenden Ansprüche, wobei der zweite Unterbrecher (120) ein Vakuum-Unterbrecher ist.

5. Gleichspannungs-Leitungsschutzschalter (100) gemäß einem der vorhergehenden Ansprüche, wobei der Gleichspannungs-Leitungsschutzschalter (100) einen sechsten Knoten (106) und einen siebten Knoten (107) aufweist, wobei der Kommutatorwiderstand (150) zwischen dem ersten Knoten (101) und dem sechsten Knoten (106) angeordnet ist, wobei die Kommutatorspule (160) zwischen dem sechsten Knoten (106) und dem siebten Knoten (107) angeordnet ist, wobei der Kommutatorkondensator (170) zwischen dem siebten Knoten (107) und dem fünften Knoten (105) angeordnet ist.

6. Verfahren zum Betreiben eines Gleichspannungs-Leitungsschutzschalter (100), wobei der Gleichspannungs-Leitungsschutzschalter (100) gemäß einem der Ansprüche 1 bis 5 ausgebildet ist, wobei der Schalter (190) zu Beginn des Verfahrens geöffnet ist, wobei das Verfahren die folgenden Schritte aufweist:

    - Detektieren eines Anstiegs einer Stromstärke eines im Gleichspannungs-Leitungsschutzschalter (100) fließenden elektrischen Stroms;
    - Schließen des Schalters (190);
    - Öffnen des ersten Unterbrechers (110) und des zweiten Unterbrechers (120).

7. Gleichstrom-Leitungsnetz mit einem Gleichspannungs-Leitungsschutzschalter (100) gemäß einem der Ansprüche 1 bis 5.

8. Gleichstrom-Leitungsnetz gemäß Anspruch 7, wobei das Gleichstrom-Leitungsnetz eine Masche aufweist.

**Claims**

1. DC voltage line circuit breaker (100) comprising a first node (101), a second node (102), a third node (103), a fourth node (104) and a fifth node (105), wherein a parallel circuit comprising a first interrupter (110) and a first capacitor (130) is arranged between the first node (101) and the fourth node (104),

wherein a parallel circuit comprising a second interrupter (120) and a second capacitor (140) is arranged between the fourth node (104) and the third node (103),

wherein a series circuit comprising a commutator resistor (150), a commutator coil (160) and a commutator capacitor (170) is arranged between the first node (101) and the fifth node (105),

wherein an energy absorber (180) is arranged between the first node (101) and the fifth node (105),

wherein a switch (190) is arranged between the fifth node (105) and the third node (103),

wherein a first DC voltage (200) can be applied between the first node (101) and the second node (102),

wherein a second DC voltage (210) can be tapped off between the third node (103) and the second node (102).

2. DC voltage line circuit breaker (100) according to Claim 1, wherein the second capacitor (140) has a capacitance which is ten times as great as a capacitance of the first capacitor (130).

3. DC voltage line circuit breaker (100) according to one of the preceding claims,
wherein the first interrupter (110) is an SF6 interrupter.

4. DC voltage line circuit breaker (100) according to one of the preceding claims,
wherein the second interrupter (120) is a vacuum interrupter.

5. DC voltage line circuit breaker (100) according to one of the preceding claims,
wherein the DC voltage line circuit breaker (100) has a sixth node (106) and a seventh node (107),
wherein the commutator resistor (150) is arranged between the first node (101) and the sixth node (106),
wherein the commutator coil (160) is arranged between the sixth node (106) and the seventh node (107),
wherein the commutator capacitor (170) is arranged between the seventh node (107) and the fifth node (105).

6. Method for operating a DC voltage line circuit breaker (100),
wherein the DC voltage line circuit breaker (100) is designed according to one of Claims 1 to 5,
wherein the switch (190) is open at the beginning of the method,
wherein the method has the following steps:

- detection of a rise in a current intensity of an electric current flowing in the DC voltage line circuit breaker (100);

- closing of the switch (190);
- opening of the first interrupter (110) and the second interrupter (120).

7. DC line network comprising a DC voltage line circuit breaker (100) according to one of Claims 1 to 5.

8. DC line network according to Claim 7, wherein the DC line network has a mesh.

**Revendications**

1. Disjoncteur (100) à tension continue
comprenant un premier noeud (101), un deuxième noeud (102), un troisième noeud (103), un quatrième noeud (104) et un cinquième noeud (105),
dans lequel il est monté entre le premier noeud (101) et le quatrième noeud (104) un circuit parallèle d'un premier dispositif (110) d'interruption et d'un premier condensateur (130),
dans lequel il est monté entre le quatrième noeud (104) et le troisième noeud (103) un circuit parallèle d'un deuxième dispositif (120) d'interruption et d'un deuxième condensateur (140),
dans lequel il est monté entre le premier noeud (101) et le cinquième noeud (105) un circuit série d'une résistance (150) de collecteur, d'une bobine (160) de collecteur et d'un condensateur (170) de collecteur,
dans lequel il est monté un absorbeur (190) d'énergie entre le premier noeud (101) et le cinquième noeud (105),
dans lequel il est monté un interrupteur (190) entre le cinquième noeud (105) et le troisième noeud (103),
dans lequel une première tension (200) continue peut être appliquée entre le premier noeud (101) et le deuxième noeud (102),
dans lequel une deuxième tension (210) continue peut être prélevée entre le troisième noeud (103) et le deuxième noeud (102).

2. Disjoncteur (100) à tension continue suivant la revendication 1,
dans lequel le deuxième condensateur (140) a une capacité qui est dix fois plus grande que la capacité du premier condensateur (130).

3. Disjoncteur (100) à tension continue suivant l'une des revendications précédentes,
dans lequel le premier dispositif (110) d'interruption est un dispositif d'interruption à SF6.

4. Disjoncteur (100) à tension continue suivant l'une des revendications précédentes,
dans lequel le deuxième dispositif (120) d'interruption est un dispositif d'interruption à vide.

**5.** Disjoncteur (100) à tension continue suivant l'une des revendications précédentes,
dans lequel le disjoncteur (100) à tension continue a un sixième noeud (106) et un septième noeud (107),
dans lequel la résistance (150) de collecteur est montée entre le premier noeud (101) et le sixième noeud (106),
dans lequel la bobine (160) de collecteur est montée entre le sixième noeud (106) et le septième noeud (107),
dans lequel le condensateur (170) de collecteur est monté entre le septième noeud (107) et le cinquième noeud (105).

**6.** Procédé pour faire fonctionner un disjoncteur (100) à tension continue,
dans lequel le disjoncteur (100) à tension continue est constitué suivant l'une des revendications 1 à 5,
dans lequel on ouvre l'interrupteur (190) au début du procédé,
dans lequel le procédé a les stades suivants :

- détection d'une augmentation de la densité d'un courant électrique passant dans le disjoncteur (100) à tension continue,
- fermeture de l'interrupteur (190),
- ouverture du premier dispositif (110) d'interruption et du deuxième dispositif (120) d'interruption.

**7.** Réseau de distribution à courant continu,
ayant un disjoncteur (100) à tension continue suivant l'une des revendications 1 à 5.

**8.** Réseau de distribution à courant continu suivant la revendication 7,
dans lequel le réseau de distribution à courant continu a une maille.

# FIG 1

FIG 2

EP 2 721 626 B1

# FIG 3

400

430

1000
500
420
0

0.02 0.04 0.06 0.08 0.1 0.12 0.14

100
50
420
0

440

1000
500
420
0

455

450

0.02 0.04 0.06 0.08 0.1 0.12 0.14

410

EP 2 721 626 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0758137 A
- US 4740858 A
- US 4442469 A